# EUROPÄISCHE PATENTSCHRIFT

(11) **EP 0 648 083 B1**
(45) Veröffentlichungstag und Bekanntmachung des Hinweises auf die Patenterteilung: **02.04.1997**
(21) Anmeldenummer: 94912488.7
(22) Anmeldetag: 26.04.1994
(51) Int. Cl.: A47G 1/02, A47G 1/14, A45D 42/00

(54) **TOILETTEARTIKEL**
TOILET ARTICLE
ARTICLE DE TOILETTE

(30) Priorität: 28.04.1993 DE 9306293 U
(43) Veröffentlichungstag der Anmeldung: 19.04.1995
(73) Patentinhaber: NEO-PLASTIC DR. DOETSCH DIESPECK GMBH, D-91456 Diespeck (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9400461
(87) Internationale Veröffentlichungsnummer: WO9424908

(56) Entgegenhaltungen:
- CA-A- 2 055 317
- FR-A- 875 506
- FR-A- 1 520 205
- FR-A- 2 053 627
- US-A- 2 761 355
- US-A- 3 445 151
- US-A- 3 557 804

## Beschreibung

Die vorliegende Erfindung bezieht sich auf einen Toiletteartikel gemäß dem Oberbegriff des Anspruchs 1.

Ein derartiger Toiletteartikel in Form eines Spiegels ist aus der US-A-3 455 151 bekannt. Dort ist ein Rückwandteil aus polymerem Material derart mit einer Vertiefung versehen, daß ein diese Vertiefung umgebender erhöhter Rand in Form eines Rahmens entsteht. Die innere Oberfläche des Randes bildet den Boden der Vertiefung. Dieser Boden ist mit von diesem abstehenden Rippen versehen, die alle im gleichen Abstand von dem Rand angeordnet sind. Durch den Abstand ist ein abschnittsweise vorhandener Spalt gleicher Spaltbreite gebildet. Die Rippen begrenzen eine Innenfläche, in die eine Spiegelscheibe eingesetzt wird. Die Größe der Spiegelscheibe ist so bemessen, daß sie leicht und mit geringer Toleranz vom Rand umfaßt wird und der Rand die Spiegelscheibe somit zentriert und lagefixiert.

Um die Spiegelscheibe fest mit dem Rückwandteil zu verbinden, ist ein U-förmiger Klemmrahmen aus dem gleichen polymeren Material wie der Rückwandteil vorgesehen, dessen einer, längerer U-Schenkel in den abschnittsweise vorhandenen Spalt eingesetzt und in diesem entweder durch einen Heiß-Siegel-Prozeß oder durch Anwendung von Lösungsmitteln, also praktisch durch einen Klebeprozeß, mit dem Rückwandteil verbunden ist. Der andere, kleinere U-Schenkel drückt mit seiner Stirnkante im Randbereich gegen die Oberfläche der Spiegelscheibe und hält diese so in ihrer Lage fest. Zwecks guter Verbindung des Klemmrahmens mit dem Rückwandteil besitzt die Stirnkante des langen U-Schenkels des Klemmrahmens eine mittig angebrachte, umlaufende V-förmige Erhöhung. Diese bedingt eine feste Verbindung beim Heiß-Siegel-Prozeß oder bei Verwendung eines Lösungsmittels.

Mit der vorliegenden Erfindung soll die Aufgabe gelöst werden, mit geringem Aufwand, insbesondere ohne das kostenträchtige Erfordernis der Einhaltung geringer Toleranzen, eine dauerhafte Befestigung eines Einsatzteiles beliebiger Art in einem Träger aus polymerem Material zu erreichen.

Gelöst wird diese Aufgabe durch die im Anspruch 1 angegebenen Merkmale.

Durch das Einschrumpfen des Einsatzteils kann das Einlegeteil ohne die Anwendung eines Heiß-Siegel-Prozesses schnell und rationell befestigt werden, zumal die Anschaffung einer Heiß-Siegel-Prozeßeinrichtung nicht erforderlich ist. Ebenso braucht durch das Einschrumpfen auch das alternative, bekannte Klebeverfahren mittels Lösungsmitteln nicht angewendet zu werden, so daß auch die Gefahr einer schädlichen Umweltbeeinflussung entfällt.

Es ist zwar bereits aus der FR-A-2 053 627 bekannt, einen Handspiegel aus einem Artikelteil aus polymerem Material und einer Spiegelscheibe dadurch herzustellen, daß der Artikelteil eine Vertiefung entsprechend der Dicke der Spiegelscheibe aufweist. Am Rand des Artikelteils ist ein radial nach innen gerichteter Randwulst vorgesehen, der die Spiegelscheibe von oben umgreift. Die feste Verbindung der beiden Teile wird dadurch erreicht, daß die Spiegelscheibe in die Vertiefung des Artikelteils unmittelbar nach dem Ausformen desselben aus der Spritzgießform eingelegt wird. Durch das beim Erkalten auftretende Schrumpfen des polymeren Materials wird die Spiegelscheibe lagefixiert. Hierbei wirken die Schrumpfkräfte unmittelbar auf die Spiegelscheibe. Dadurch können in der Spiegelscheibe Spannungen auftreten, die schon bei geringer Belastung, beispielsweise durch Druck, Schlag oder dgl. zum Bruch der Spiegelscheibe führen können. Diese Gefahr tritt beim Erfindungsgegenstand nicht auf, da die Schrumpfkräfte auf das Einsatzteil einwirken. Dieses besteht jedoch aus Metall, Kunststoff oder dgl., so daß bei diesem eine Bruchgefahr durch Schrumpfspannungen nicht gegeben ist.

Das Einlegen des Einsatzteiles in den Artikelteil aus polymerem Material bereitet keinerlei Schwierigkeiten, da eine Schnappwirkung im Sinne einer dauerhaften Schnappverbindung nicht erforderlich ist. Es ist Zielsetzung, daß mit den durch das Abkühlen des Artikelteils aus polymerem Material bedingten Strukturveränderungen, insbesondere temperaturbedingten Schwindungen, eine dauerhafte Schrumpfverbindung erzielbar ist.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: die Draufsicht auf einen Handspiegel,
- Fig. 2: eine Ansicht gemäß dem Schnitt A-A der Fig. 1,
- Fig. 3: eine Ansicht gemäß dem Schnitt B-B der Fig. 1,
- Fig. 4: eine Draufsicht auf die Rückseite eines Aufstellspiegels,
- Fig. 5: eine Ansicht gemäß dem Schnitt C-C der Fig. 4 und

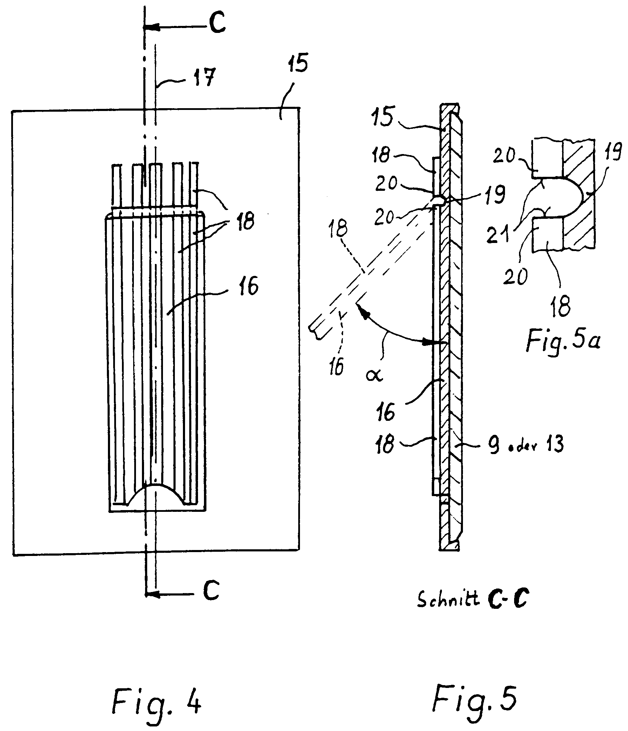

- Fig. 5: a einen vergrößerten Ausschnitt des Scharniers der Fig. 4 und 5.

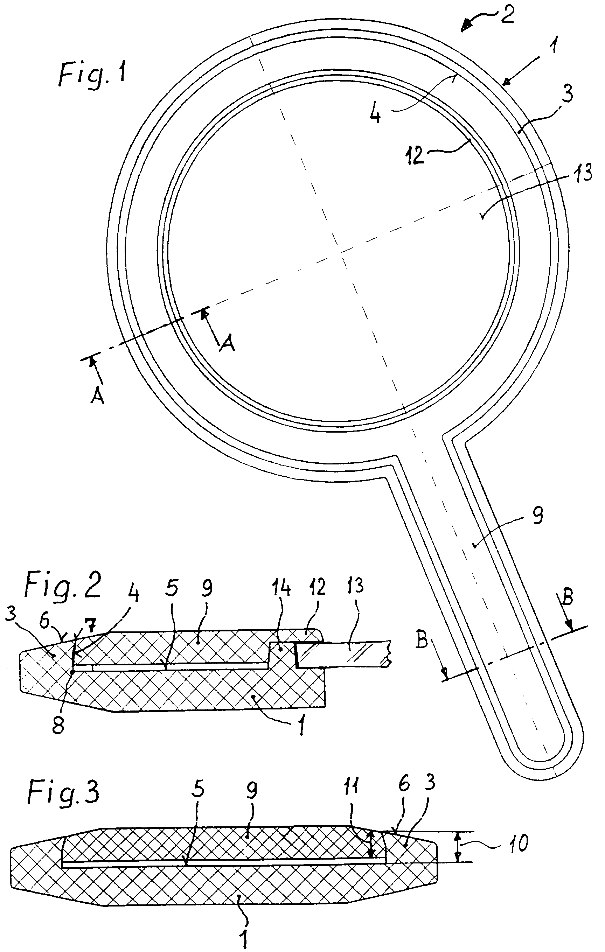

In den Fig. 1 bis 3 ist mit 1 ein Träger aus polymerem Material für einen Handspiegel 2 bezeichnet. Dieser besitzt einen umlaufenden Rand 3, dessen nach innen weisende Wand 4 vom Auflagegrund 5 aus zur Oberfläche 6 hin als Hinterschneidung ausgebildet ist. Hierzu ist die Wand 4 zur Oberfläche 6 hin nach innen geneigt, so daß die einspringende Kante 7 gegenüber der nicht einspringenden Kante 8 etwa 0,05 bis 0,4 mm versetzt ist.

Der umlaufende Rand 4 mit der Hinterschneidung dient zur Festlegung eines Einsatzteils 9, beispielsweise einer Dekorblende aus Metall, Kunststoff oder dgl.. Der umlaufende Rand 3 und das Einsatzteil 9 sind derart bemessen, daß das Einsatzteil 9 unmittelbar nach dem thermoplastischen Formprozess des Trägers 1, solange dieser noch eine Temperatur von mindetens 40°C bis 60°C besitzt, leicht eingesetzt werden kann und danach während des weiteren Abkühlens des Trägers 1 eingeschrumpft wird. Dieses Einschrumpfen erfolgt mit hoher Haltekraft, da während des Abkühlens des Trägers 1 noch Strukturveränderungen, insbesondere temperaturbedingte Materialschwindungen infolge fortschreitender Polymerisation des Trägermaterials auftreten, die zu deutlichen Volumenveränderungen führen. Diese Volumenveränderungen durch den "Verarbeitungsschwund" bedingt, sind wesentlich größer als die durch reine Erwärmung oder Abkühlung erreichbare Schrumpfung des eingesetzten polymeren Materials.

Aus diesem Grund können bei der Festlegung der Abmessungen des Einsatzteiles 9 als auch bei der Herstellung des Spritzwerkzeuges größere Toleranzen als bisher üblich zugelassen werden. Trotzdem wird eine feste und dauerhafte Halterung des Einsatzteils 9 im polymeren Träger 1 gewährleistet.

Vorteilhaft ist die Höhe 10 der Wand 4 größer als die Dicke 11 des Einsatzteils 9, jedenfalls im Bereich der Hinterschneidung 3, 4.

Die Neigung der Wand 4 kann vom Auflagegrund 5 aus kontinuierlich gerade oder konkav gekrümmt verlaufen. Es kann auch vorteilhaft sein, durch eine oder mehrere stufenweise Änderung(en) der Steilheit der Wand 4 gerade oder konkav gekrümmte Abschnitte zu erreichen.

Der Einsatzteil 9 kann, wie anhand der Fig. 2 ersichtlich, abstehende Halteansätze 12 oder einen umlaufenden Flansch aufweisen, die ein Einlegeteil 13, beispielsweise einen Spiegel, übergreifen und damit lagefixieren. Die Halteansätze 12 oder ein umlaufender Flansch können so gestaltet sein, daß das Einlegeteil 13 spielfrei oder mit geringem Spiel in seiner Lage gesichert ist.

Zur Festlegung der Höhenlage des Einsatzteiles 9 können am Träger 1 Auflagestege 14 vor allem im Bereich der Halteansätze 12 vorgesehen sein. Diese Auflagestege 14 können zusätzlich dazu dienen, den Einsatzteil 9 und/oder das Einlegeteil 13 in ihrer Einsetzlage zu fixieren.

Die Hinterschneidungen 3, 4 können, wie aus den Fig. 1 bis 3 ersichtlich, umlaufend sein. Es ist aber auch möglich, diese Hinterschneidungen 3, 4 mehrfach punktuell oder abschnittsweise auszubilden.

Als polymere Kunststoffe für den polymeren Artikelteil 1 kommen insbesondere Polystyrol, Polypropylen, Acrylbutadienstyrol oder Polykarbonat in Betracht.

Diese polymeren Kunststoffe besitzen hohe Schwindungswerte, die im mittleren Bereich etwa 15 x 10 ⁻⁵ mm/°C betragen.

Gemäß einer in den Fig. 4 und 5 dargestellten Weiterbildung der Erfindung kann an einer Wand, insbesondere Rückwand 15 des Trägers 1 eines Aufstellspiegels, ein Aufstellsteg 16 angeformt sein. Dieser ist zur Versteifung mit in Richtung der Längsachse 17 verlaufenden Versteifungsrippen 18 versehen.

Die Versteifungsrippen 18 sind im Bereich einer Biegestelle oder eines Scharniers 19 unterbrochen oder nur bis dorthin geführt und die Materialstärke ist dort so gewählt, daß der Aufstellsteg 16 herausgestellt werden kann. Beispielsweise beträgt die Materialstärke dort 0,2 mm bis 0,6 mm, insbesondere etwa 0,4 mm.

Zur Begrenzung des Ausstellwinkels α des Aufstellsteges 16 sind im Bereich des Scharniers 19 ein oder mehrere abstehende Anschlagblöck(e) 20 durch die Endkanten 21 der Versteifungsrippen 18 gebildet.

Bei dieser Weiterbildung der Erfindung werden die Rückwand 15 des Tägers 1, der Aufstellsteg 16 und die Biegestelle bzw. das Scharnier 19 in einem einzigen Spritzvorgang außergewöhnlich rationell und damit kostengünstig hergestellt.

Die vorliegende Erfindung eignet sich zur Herstellung von Toiletteartikel mit zumindest einem Artikelteil aus polymerem Material beliebiger Art. Bevorzugte Anwendungsgebiete sind Spiegel aller Art, Seifendosen, Zahnbürsten-Köcher, Mundbecher oder dgl..

## Patentansprüche

1. Toiletteartikel, wie Spiegel, Seifendose, Zahnbürsten-Köcher, Mundbecher oder dgl., mit einem als Wandteil, insbesondere als Rückwand, ausgebildeten Artikelteil (1) aus polymerem Material und einem mit diesem fest verbundenen Einsatzteil (9), wobei der Einsatzteil (9) überstehende Halteansätze (12) aufweist, die ein Einlegeteil (13), insbesondere eine Spiegelscheibe, übergreifen und dieses Einlegeteil (13) spielfrei oder mit geringem Spiel lagefixieren, dadurch gekennzeichnet, daß der Artikelteil (1) mehrere punktuelle oder abschnittsweise Hinterschneidungen (3, 4) oder wenigstens eine umlaufende Hinterschneidung (3, 4) aufweist, die den Einsatzteil (9) dadurch kraft- und formschlüssig erfassen und umfassen, daß der Einsatzteil (9) mit dem polymeren Artikelteil (1) durch eine Schrumpfverbindung verbunden ist.

2. Toiletteartikel nach Anspruch 1, dadurch gekennzeichnet, daß der Einsatzteil (9) im Bereich der Halteansätze (12) auf einem Auflagesteg (14) des Artikelteils (1) aufliegt.

3. Toiletteartikel nach Anspruch 2, dadurch gekennzeichnet, daß der Auflagesteg (14) als Lagefixiermittel für das Einlegeteil (13) und/oder das Einsatzteil (9) ausgebildet ist.

4. Toiletteartikel nach einem der Ansprüche 1 bis 3, dadurch gekennzeichnet, daß die einspringende(n) Kante(n) (7) der Hinterschneidung (3, 4) gegenüber der oder den nicht einspringenden Kante(n) (8) der Hinterschneidung (3, 4) um 0,05 bis 0,4 mm versetzt ist bzw. sind.

5. Toiletteartikel nach einem der Ansprüche 1 bis 4, dadurch gekennzeichnet, daß die Höhe (10) der am Einsatzteil (9) anliegenden Wand (4) größer ist als die Dicke (11) des Einsatzteiles (9) im Bereich der Hinterschneidung (3, 4).

6. Toiletteartikel nach einem der Ansprüche 1 bis 5, dadurch gekennzeichnet, daß die am Einsatzteil (9) anliegende Wand (4) der Hinterschneidung (3, 4) vom Auflagegrund (5) aus kontinuierlich oder abgestuft und gerade oder konkav gekrümmt ausgebildet ist.

7. Toiletteartikel nach einem der Ansprüche 1 bis 6, dadurch gekennzeichnet, daß an einer Wand, insbesondere an einer Rückwand (15) des Artikelteils (1) ein mit Versteifungsrippen (18) versehener Aufstellsteg (16) angeformt ist und daß die Versteifungsrippen (18) in einer Richtung quer zur Steglänge (17) zur Bildung einer Biegestelle oder eines Scharniers (19) enden oder unterbrochen sind.

8. Toiletteartikel nach Anspruch 7, dadurch gekennzeichnet, daß die Materialstärke im Bereich der Biegestelle bzw. des Scharniers (19) 0,2 mm bis 0,6 mm, insbesondere etwa 0,4 mm beträgt.

9. Toiletteartikel nach Anspruch 7 oder 8, dadurch gekennzeichnet, daß im Bereich der Biegestelle bzw. des Scharniers (19) wenigstens ein abstehender Anschlagblock (20) zur Ausstellbegrenzung des Aufstellsteges (16) vorgesehen ist.

10. Toiletteartikel nach Anspruch 9, dadurch gekennzeichnet, daß der bzw. die Anschlagblöck(e) (20) durch die Endkanten (21) der Versteifungsrippen (18) gebildet ist bzw. sind.

## Claims

1. A toilet article such as a mirror, soaptin, toothbrush holder, tooth glass or the like, having an article part (1) made of polymeric material as a wall part, in particular a rear wall, with an insert part (9) connected firmly to it, the insert part (9) exhibiting overhanging keeper extensions (12) which overlap an inlaid part (13), in particular a piece of mirror, and locate this inlaid part (13) without or with little play,
characterized in that
the article part (1) exhibits undercuts (3, 4) at certain points or sections or at least one undercut (3, 4) running right round, which seize and embrace the insert part (9) frictionally and positively by the insert part (9) being connected to the polymeric article part (1) by shrinkage.

2. A toilet article as in Claim 1, characterized in that in the region of the keeper extensions (12) the insert part (9) rests against a bearer ridge (14) on the article part (1).

3. A toilet article as in Claim 2, characterized in that the bearer ridge (14) is made as the means of location of the inlaid part (13) and/or the insert part (9).

4. A toilet article as in one of the Claims 1 to 3, characterized in that the reentrant edge or edges (7) of the undercut (3, 4) is/are offset with respect to the non-reeentrant edge or edges (8) of the undercut (3, 4) by 0.05 to 0.4 mm.

5. A toilet article as in one of the Claims 1 to 4, characterized in that the height (10) of the wall (4) resting against the insert part (9) is greater than the thickness (11) of the insert part (9) in the region of the undercut (3, 4).

6. A toilet article as in one of the Claims 1 to 5, characterized in that the wall (4) of the undercut (3, 4) resting against the insert part (9) is made continuous or stepped from the bearer base (5) and straight or with a concave curvature.

7. A toilet article as in one of the Claims 1 to 6, characterized in that onto one wall of the article part (1), in particular a rear wall (15), is moulded a support-strut (16) provided with stiffening-ribs (18) and that the stiffening-ribs (18) end or are interrupted in a direction across the length (17) of the strut to form a point of bend or a hinge (19).

8. A toilet article as in Claim 7, characterized in that the thickness of material in the region of the point of bend or of the hinge (19) amounts to 0.2 to 0.6 mm, especially about 0.4 mm.

9. A toilet article as in Claim 7 or 8, characterized in that at least one stop-block (20) standing out in the region of the point of bend or the hinge (19) is provided for limiting the outward movement of the support-strut (16).

10. A toilet article as in Claim 9, characterized in that the stop-block or stop-blocks (20) is/are formed by the edges (21) at the ends of the stiffening-ribs (18).

## Revendications

1. Article de toilette, tel qu'un miroir, un distributeur de savon, un étui de brosse à dents, une timbale ou objet analogue, qui comporte une partie (1) faite d'un matériau polymère et constituant un élément de paroi, en particulier la paroi arrière, ainsi qu'un insert (9) solidaire de la partie (1) et portant des appendices de maintien (12) qui sont en prise avec une pièce d'insertion (13), en particulier un miroir de manière à en fixer la position, sans jeu ou avec un jeu faible,
caractérisé en ce que
la partie (1) présente plusieurs contre-dépouilles (3, 4) ponctuelles ou localisées, ou au moins une contre-dépouille périphérique (3, 4), entourant et enserrant à force et par combinaison de formes l'insert (9), de sorte que celui-ci se trouve fretté à l'intérieur de la partie (1).

2. Article de toilette selon la revendication 1,
caractérisé en ce que l'insert (9), au niveau des appendices de maintien (12) repose sur une bride d'appui (14) de la partie (1).

3. Article de toilette selon la revendication 2,
caractérisé en ce que
la bride d'appui (14) constitue l'organe fixant la position de la pièce d'insertion (13) et/ou de l'insert (9).

4. Article de toilette selon une des revendications 1 à 3,
caractérisé en ce que
le (les) bord(s) (7) de la contre-dépouille (3, 4) situé(s) faisant saillie est (sont) décalé(s) de 0,05 à 0,4 mm par rapport au(x) bord(s) (8) de la contre-dépouille situé(s) en retrait.

5. Article de toilette selon une des revendications 1 à 4,
caractérisé en ce que
la hauteur (10) de la paroi (4) en appui le long de l'insert (9) est supérieure à l'épaisseur (11) de l'insert (9) au niveau de la contre-dépouille (3, 4).

6. Article de toilette selon une des revendications 1 à 5,
caractérisé en ce que
la paroi (4) de la contre-dépouille (3, 4) en appui le long de l'insert (9), en partant du fond (5) présente un tracé continu ou à gradins, droit ou concave.

7. Article de toilette selon une des revendications 1 à 6,
caractérisé en ce que
une patte de dressage (16) munie de nervures de rigidité (18) est moulée sur une paroi, en particulier une paroi arrière (15) de la partie (1), les nervures (18) se terminant ou étant interrompues transversalement à la direction longitudinale (17) de la patte de manière à former une zone de pliage ou une charnière (19).

8. Article de toilette selon la revendication 7,
caractérisé en ce que
l'épaisseur du matériau au niveau de la zone de pliage ou de la charnière (19) est comprise entre 0,2 et 0,6 mm, de préférence 0,4 mm environ.

9. Article de toilette selon la revendication 7 ou 8,
caractérisé en ce
qu'il est prévu, dans la zone de pliage ou de la charnière (19) au moins un bloc de butée (20) faisant saillie de manière à limiter l'inclinaison de la patte de dressage (16).

10. Article de toilette selon la revendication 9,
caractérisé en ce que
le (les) bloc(s) (20) est (sont) formé(s) par les bords extrêmes (21) des nervures de raidissement (18).
